# NEUE EUROPÄISCHE PATENTSCHRIFT

(11) **EP 2 459 036 B2**
(45) Veröffentlichungstag und Bekanntmachung des Hinweises auf die Entscheidung über den Einspruch: **07.02.2018**
(45) Hinweis auf die Patenterteilung: 14.05.2014
(21) Anmeldenummer: 10740189.5
(22) Anmeldetag: 21.07.2010
(51) Int. Cl.: A47J 31/44

(54) **KAFFEEMASCHINE MIT EINER SENSOREINRICHTUNG**
COFFEE MACHINE COMPRISING A SENSOR UNIT
MACHINE À CAFÉ ÉQUIPÉE D UN DISPOSITIF DE DÉTECTION

(30) Priorität: 31.07.2009 DE 102009035534
(43) Veröffentlichungstag der Anmeldung: 06.06.2012
(73) Patentinhaber: WMF Württembergische Metallwarenfabrik AG, 73309 Geislingen/Steige (DE)
(72) Erfinder: DOLLNER, Sander, 89079 Ulm-Wiblingen (DE); KIEFER, Alexander, 73329 Kuchen (DE); STARTZ, Armin, 89197 Weidenstetten (DE); ALBERT, Heinz, 89150 Laichingen (DE); ARNDT, Peter, 89134 Blaustein (DE)
(74) Vertreter: BRP Renaud & Partner mbB Rechtsanwälte Patentanwälte Steuerberater
(86) Internationale Anmeldenummer: PCT/EP2010/060549
(87) Internationale Veröffentlichungsnummer: WO 2011/012513

(56) Entgegenhaltungen:
- WO-A1-02/09562
- US-A1- 2007 107 604
- US-A1- 2008 148 954

## Beschreibung

Die vorliegende Erfindung betrifft eine Kaffeemaschine mit einer Sensoreinrichtung. Eine solche kaffeemaschine ist z.B. in der US 2008/148954 A1 beschrieben.

In Kaffeemaschinen gibt es zahlreiche Anwendungen für Sensoren, welche insbesondere die Lage, die Präsenz und bspw. eine Temperatur von Bauteilen und Medien auswerten. Derzeit werden diese Messaufgaben von unterschiedlichen Sensoren ausgeführt, insbesondere wird für fast jede Aufgabe ein eigener Sensor verwendet. Es gibt Hallsensoren, die Drehrichtungen und - winkel auswerten können und die bspw. dazu benutzt werden, um die Spindelbewegung eines Brühers zu erfassen. Die Lageerfassung erfolgt dabei oftmals über einen Magneten mit einem zugehörigen Magnetschalter, kurz auch sog. Reedschalter, genannt. Durch die Vielzahl an vorhandenen Sensoren erhöhen sich jedoch nicht nur die Kosten, sondern auch die Komplexität und damit die Fehleranfälligkeit.

Die vorliegende Erfindung beschäftigt sich mit dem Problem, eine verbesserte Kaffeemaschine anzugeben, die insbesondere einfacher und damit kostengünstiger aufgebaut ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, zur Überwachung von zumindest zwei unterschiedlichen Funktionen in einer Kaffeemaschine eine erfindungsgemäße Sensoreinrichtung einzusetzen, die zumindest einen Magnetfeldsensor aufweist, der derart ausgebildet ist, dass er wenigstens zwei durch jeweils ein Magnetelement erzeugte Magnetfelder bzw. Magnetfeldänderungen detektieren und damit die zugehörigen Funktionen überwachen kann. Das Magnetelement kann hierbei bspw. ein Permanentmagnet oder aber auch ein Stromleiter sein, dessen Magnetfeld erst bei einer Bestromung entsteht. Das Magnetelement muss kein separates Teil sein, es können auch magnetische Eigenschaften eines Bauteils oder in das Bauteil eingebrachte Magnetfeld erzeugende oder -beeinflussende Substanzen dazu verwendet werden. Selbstverständlich ist dabei daran gedacht, dass der erfindungsgemäß vorgesehene Magnetfeldsensor zur Überwachung einer Vielzahl unterschiedlicher, sich bspw. auch überlappender, Magnetfelder ausgebildet ist und dadurch im Vergleich zu bisherigen Magnetfeldsensoren in der Lage ist, eine Vielzahl an Funktionen gleichzeitig oder sequentiell zu überwachen und das mit nur einem einzigen Magnetfeldsensor. Das Vorsehen mehrerer Magnetfeldsensoren, wovon jeder jeweils nur ein einziges Magnetfeld bzw. eine einzige Magnetfeldänderung überwacht, erübrigt sich dadurch, wodurch die erfindungsgemäße Kaffeemaschine weniger Bauteile erfordert und dadurch konstruktiv einfacher aufgebaut und kostengünstiger hergestellt werden kann.

Bei einer vorteilhaften Weiterbildung der erfindungsgemäßen Lösung, ist die Sensoreinrichtung zur Überwachung einer Temperatur und/oder eines Stromflusses anhand von Magnetfeldänderungen ausgebildet. Bspw. kann im Bereich eines Milchschäumers der Kaffeemaschine ein temperaturabhängiges Magnetelement angeordnet sein, dessen Magnetfeldstärke sich mit der Temperatur ändert. Durch die hierdurch hervorgerufene Magnetfeldänderung, die mittels des zumindest einen Magnetfeldsensors der Sensoreinrichtung detektiert wird, kann die Sensoreinrichtung auf eine zugehörige Änderung der Temperatur schließen und bspw. entsprechende Kompensationsmaßnahmen ergreifen bzw. einleiten. In gleicher Weise kann auch an einem Fuß eines sogenannten Steamers ein temperaturabhängiges Magnetelement an- bzw. eingebaut werden, wodurch auch in diesem Bereich anhand der auftretenden Magnetfeldänderungen die zugehörigen Temperaturänderungen detektierbar sind. Denkbar ist selbstverständlich auch, dass an sich beweglichen Teilen der Kaffeemaschine, bspw. an verschiedenen Stellen einer Brüheinrichtung, jeweils ein Magnetelement angeordnet ist, wobei bei einer Bewegung des Magnetelementes dies zu einer Änderung des zugehörigen Magnetfeldes führt und dadurch indirekt über die Magnetfeldänderung die Lage bzw. die Position des an der Brüheinrichtung angeordneten Magnetelementes und dadurch der Brüheinrichtung selbst von der Sensoreinrichtung überwacht werden kann. Sind bspw. mehrere Magnetelemente an unterschiedlichen Stellen der Brüheinrichtung angeordnet, können auch die Positionen und Bewegungen dieser Teile erfasst werden. So ist es bspw. möglich zu erkennen, ob eine Einfüllrutsche vorhanden ist, und wenn ja, ob diese ein- oder ausgeschwenkt ist bzw. an der richtigen Stelle steht (Präsenz und Lage), eine Brühkammer an der richtigen Position ist und auch ein unterer Kolben tatsächlich unten ist. Erfindungsgemäß wird mittels des Magnetfeldsensors auch detektiert, ob ein Abstreifer korrekt ausgeworfen hat, wozu ein entsprechendes Magnetelement an diesem Abstreifer der Kaffeemaschine angeordnet ist.

In gleicher Weise kann auch ein Stromfluss in einem Stromleiter überwacht werden, da bei unterschiedlichen Stromstärken unterschiedliche zugehörige Magnetfelder erzeugt werden. Hierbei können auch sehr hohe Ströme, die mit konventionellen Methoden nicht wirtschaftlich gemessen werden könnten, erfasst werden, wodurch insbesondere ein vollständiges Inbetriebnahme-Prozessabbild möglich ist.

Generell kann mit der erfindungsgemäßen Sensoreinrichtung auch die Auswertung von weiteren Magnetfeldern, wie bspw. von Elektromotoren oder anderen elektrischen Bauteilen erfolgen, ebenso wie eine zugehörige Strommessung. Auch die Lage eines verstellbaren Auslaufs der Kaffeemaschine kann mittels der erfindungsgemäßen Sensoreinrichtung überwacht werden, sofern an diesem verstellbaren Auslauf ein entsprechendes Magnetelement angeordnet ist.

Mit der erfindungsgemäßen Sensoreinrichtung können im Vergleich zu bisherigen Kaffeemaschinen eine Vielzahl von bisher erforderlichen Sensoren eingespart werden, wodurch die Kaffeemaschine insgesamt konstruktiv einfacher und vor allem kostengünstiger hergestellt werden kann. Durch den zumindest einen, hochempfindlichen Magnetfeldsensor, sind zudem deutlich mehr Auswerte- und Kontrollmöglichkeiten gegeben, als dies mit bisherigen Magnetschaltern möglich war.

## Patentansprüche

1. Kaffeemaschine mit einer Sensoreinrichtung, die zumindest einen Magnetfeldsensor aufweist, der derart ausgebildet ist, dass er zumindest zwei durch jeweils ein Magnetelement erzeugte Magnetfelder bzw. Magnetfeldänderungen detektieren, wodurch die Sensoreinrichtung in der Lage ist zumindest zwei getrennte Funktionen in der Kaffeemaschine zu überwachen,
**dadurch gekennzeichnet,**
- **dass** an einer Brüheinrichtung der Kaffeemaschine ein Magnetelement angeordnet ist, dessen Lage von der Sensoreinrichtung überwacht wird und
- **dass** an einem Abstreifer der Kaffeemaschine ein Magnetelement angeordnet ist, dessen Lage und damit dessen Funktion von der Sensoreinrichtung überwacht wird.

2. Kaffeemaschine nach Anspruch 1,
**dadurch gekennzeichnet, dass** die Sensoreinrichtung zur Überwachung einer Temperatur, einer Lage und/oder eines Stromflusses anhand von Magnetfeldänderungen ausgebildet ist.

3. Kaffeemaschine nach einem der Ansprüche 1 bis 2,
**dadurch gekennzeichnet,**
**dass** die Sensoreinrichtung zur Messung eines Stromflusses ausgebildet ist.

4. Kaffeemaschine nach einem der Ansprüche 1 bis 3,
**dadurch gekennzeichnet,**
**dass** an einem, bevorzugt verstellbaren, Auslauf der Kaffeemaschine ein Magnetelement angeordnet ist, dessen Lage von der Sensoreinrichtung überwacht wird.

5. Kaffeemaschine nach einem der Ansprüche 1 bis 4,
**dadurch gekennzeichnet,**
**dass** an einem Milchschäumer der Kaffeemaschine ein Magnetelement angeordnet ist, dessen Feldstärke sich mit der Temperatur ändert, so dass mittels der Sensoreinrichtung die Temperatur überwacht werden kann.

6. Kaffeemaschine nach einem der vorhergehenden Ansprüche,
**dadurch gekennzeichnet,**
**dass** die Kaffeemaschine einen kühlbaren/gekühlten Vorratsbehälter für Milch aufweist, an dem ein Magnetelement angeordnet ist, dessen Feldstärke sich mit der Temperatur ändert, so dass mittels der Sensoreinrichtung die Temperatur überwacht werden kann.

## Claims

1. Coffee maker comprising a sensor device, which encompasses at least one magnetic field sensor, which is embodied such that it detects at least two magnetic fields or magnetic field changes, respectively, which are in each case created by means of a magnetic element, whereby the sensor device is able to monitor at least two separate functions in the coffee maker,
**characterized in**
- **that** a magnetic element, the position of which is monitored by the sensor device, is arranged on a brewing device of the coffee maker and
- **that** a magnetic element is arranged on a milk frother of the coffee maker, so that the position and therefore the function of the frother can be monitored by means of the sensor device,

2. Coffee maker according to Claim 1,
**characterized in that** the sensor device is embodied for monitoring a temperature, a position and/or a current flow by means of magnetic field changes.

3. Coffee maker according to either of Claims 1 and 2,
**characterized**
**in that** the sensor device is embodied for measuring a current flow.

4. Coffee maker according to one of Claims 1 to 3,
**characterized**
**in that** a magnetic element, the position of which is monitored by the sensor device, is arranged on a, preferably adjustable, outlet of the coffee maker.

5. Coffee maker according to one of Claims 1 to 4,
**characterized**
**in that** a magnetic element, the field intensity of which changes with the temperature, so that the temperature can be monitored by means of the sensor device, is arranged on a milk frother of the coffee maker.

6. Coffee maker according to one of the preceding claims,
**characterized**
**in that** the coffee maker encompasses a chillable/chilled storage container for milk, on which a magnetic element is arranged, the field intensity of which changes with the temperature, so that the temperature can be monitored by means of the sensor device.

## Revendications

1. Machine à café avec un dispositif de capteurs, qui comporte au moins un capteur de champ magnétique qui est conçu de sorte à pouvoir détecter au moins deux champs magnétiques ou modifications de champs magnétiques créé(e)s par un élément aimanté, ce qui permet au dispositif de capteurs de superviser au moins deux fonctions séparées dans la machine à café,
**caractérisée**
- **en ce que** sur un dispositif d'infusion de la machine à café est placé un élément aimanté dont la position est supervisée par le dispositif de capteurs et
- **en ce que** sur un racleur de la machine à café est placé un élément aimanté dont la position et de ce fait la fonction est supervisée par le dispositif de capteurs.

2. Machine à café selon la revendication 1,
**caractérisée en ce que** le dispositif de capteurs est conçu pour superviser une température, une position et/ou un flux de courant à l'aide de modifications de champs magnétiques.

3. Machine à café selon l'une quelconque des revendications 1 à 2,
**caractérisée**
**en ce que** le dispositif de capteurs est conçu pour mesurer un flux de courant.

4. Machine à café selon l'une quelconque des revendications 1 à 3,
**caractérisée**
**en ce que** sur une sortie de préférence réglable de la machine à café est placé un élément aimanté dont la position est supervisée par le dispositif de capteurs.

5. Machine à café selon l'une quelconque des revendications 1 à 4,
**caractérisée**
**en ce que** sur un émulsionneur de lait de la machine à café est placé un élément aimanté dont l'intensité de champ varie avec la température, de sorte que la température peut être supervisée au moyen du dispositif de capteurs.

6. Machine à café selon l'une quelconque des revendications précédentes,
**caractérisée**
**en ce que** la machine à café comporte un réservoir réfrigérable/réfrigéré pour du lait sur lequel est placé un élément aimanté dont l'intensité de champ varie avec la température, de sorte que la température peut être supervisée au moyen du dispositif de capteurs.
